# EUROPEAN PATENT SPECIFICATION

(11) **EP 2 857 947 B1**
(45) Date of publication and mention of the grant of the patent: **16.10.2019**
(21) Application number: 13857892.7
(22) Date of filing: 27.11.2013
(51) Int. Cl.: G06F 3/048, G06F 21/31, H04M 1/725, G06F 21/40, G06F 21/36, H04M 1/67, G06F 3/0488, G06F 3/0484, G06F 21/46

(54) **TERMINAL DEVICE AND UNLOCKING METHOD THEREOF**
ENDGERÄT UND ENTSPERRUNGSVERFAHREN DAFÜR
DISPOSITIF DE TERMINAL ET SON PROCÉDÉ DE DÉVERROUILLAGE

(30) Priority: 27.11.2012 CN 201210490647
(43) Date of publication of application: 08.04.2015
(73) Proprietor: Huawei Device Co., Ltd., Dongguan, Guangdong 523808 (CN)
(72) Inventor: ZHAO, Junjie, Shenzhen Guangdong 518129 (CN); WU, Huangwei, Shenzhen Guangdong 518129 (CN); ZHU, Yu, Shenzhen Guangdong 518129 (CN)
(74) Representative: Thun, Clemens
(86) International application number: PCT/CN2013/087905
(87) International publication number: WO 2014/082573

(56) References cited:
- EP-A1- 2 579 141
- CN-A- 101 825 986
- CN-A- 102 096 546
- CN-A- 102 880 384
- US-A1- 2008 077 984

## Description

### TECHNICAL FIELD

The present invention relates to the field of communications, and in particular, to a method for unlocking a terminal device and a terminal device.

### BACKGROUND

With development and popularization of information technologies, terminal devices become an indispensible part of people's daily life. To protect user private information stored in a terminal device, currently, most terminal devices provide a password protection function. When the terminal device is in a locking state, only by inputting a correct password can a user unlock the terminal device and enter an interface of the terminal device, so as to operate the terminal device.

For example, EP 2 579 141 A1 refers to a method and an apparatus for unlocking an operating system, which are used to unlock the system with personal information data when a user forgets a password, thereby increasing a probability of successful unlocking of the user. The method of the embodiment of the present invention includes: when a user fails in unlocking via a pattern, displaying an unlocking interface for personal information authentication, and matching personal information input by the user with personal information pre-stored in a local database.

Further, US 2008/0077984 A1 refers to a mobile communication terminal having a password notification function and a method for notifying a user of a password in the mobile communication terminal that allow the transmission of a stored password or a newly generated random password to a previously selected medium by entering a secondary password when an input password is not identical to the stored password. The method includes checking whether a password notification function is set; requesting input of a stored password, receiving an input password, and checking whether the input password is identical to the stored password.; If the input password is not identical to the stored password, the method further includes requesting input of a stored secondary password, checking whether an input secondary password is identical to the stored secondary password, and sending a password if the input secondary password is identical to the stored secondary password.

Robustness of password protection depends on complexity of a password (for example, the number of digits of a numeric password or complexity of a graphical password). It can be learned from a cryptology theory that higher complexity of a password leads to greater robustness of the password, which is not easy to crack, and lower complexity of a password leads to worse robustness of the password, which is relatively easy to crack. However, from the perspective of user experience, a more complex password indicates that it is more difficult for a user to input the password, it is likely to cause a mistake, and user experience is poor; a simpler password indicates that it is easier for a user to input the password, it is not likely to cause a mistake, and user experience is good.

In conclusion, in the prior art, greater robustness of password protection leads to worse user experience when a user inputs a password; on the contrary, worse robustness of password protection leads to better user experience when a user inputs a password. Therefore, in the prior art, user experience cannot be enhanced when robustness of password protection is ensured.

### SUMMARY

Embodiments of the present invention provide a method for unlocking a terminal device and a terminal device, so as to enhance user experience when robustness of password protection is ensured.

In a first aspect a method for unlocking a terminal device is provided, wherein a first unlocking password, a second unlocking password, and an unlocking interface are set on the terminal device, and the method comprises:
- acquiring information that triggers displaying of the unlocking interface;
- displaying the unlocking interface when the information is acquired and if a status of the terminal device meets a preset condition;
- receiving information that is input by a user on the unlocking interface; and
- determining whether the input information matches the second unlocking password,
   ∘ when a result of the determining is yes, unlocking the terminal device; and
   ∘ when the result of the determining is no, determining whether the input information matches the first unlocking password, and if a result of the determining is yes, unlocking the terminal device,
wherein a number of characters of the second unlocking password is less than a number of characters of the first unlocking password when the first and second unlocking passwords consist of characters,
or
the second unlocking password is part of a graph of the first unlocking password.

In a first implementation form of the first aspect the preset condition comprises:
the number of times the second unlocking password has been used is less than a preset threshold and/or displaying of the unlocking interface is triggered within a preset period after the user terminates an operation on the terminal device.

In a second implementation form of the first aspect the method further comprises:
when it is determined that the information does not match either the first unlocking password or the second unlocking password, determining that password input fails, and accumulating the number of times of password input failures;
determining whether the number of times of password input failures is less than a preset threshold; and
if a result of the determining is that the number of times of password input failures is less than the preset threshold, performing the step of receiving information that is input by the user on the unlocking interface.

In a second aspect a terminal device configured to perform any of the above methods is provided.

In a third aspect a computer readable storage medium having a program recorded thereon is provided, wherein the program makes a computer execute the method the first aspect or its implementation forms.

In the foregoing technical solutions, information that triggers displaying of an unlocking interface is acquired; when the information is acquired, if a status of a terminal device meets a preset condition, a second unlocking interface is displayed; information that is input by a user on the second unlocking interface is received; it is determined whether the input information matches a second unlocking password, and if a result of the determining is yes, the terminal device is unlocked; where complexity of the second unlocking password is lower than complexity of a first unlocking password. The complexity of the second unlocking password is lower than the complexity of the first unlocking password, and only when the information is acquired and if the status of the terminal device meets the preset condition, the second unlocking interface is displayed and the second unlocking password is used; in this way, user experience is enhanced when robustness of password protection is ensured.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for unlocking a terminal device according to an embodiment of the present invention;
FIG. 2 is a schematic flowchart of another method for unlocking a terminal device according to an embodiment of the present invention;
FIG. 3 is a schematic diagram of an optional unlocking password according to an embodiment of the present invention;
FIG. 4 is a schematic diagram of an optional unlocking interface according to an embodiment of the present invention;
FIG. 5 is a schematic diagram of another optional unlocking interface according to an embodiment of the present invention;
FIG. 6 is a schematic flowchart of still another method for unlocking a terminal device according to an embodiment of the present invention;
FIG. 7 is a schematic structural diagram of a terminal device according to an embodiment of the present invention;
FIG. 8 is a schematic structural diagram of another terminal device according to an embodiment of the present invention;
FIG. 9 is a schematic structural diagram of still another terminal device according to an embodiment of the present invention;
FIG. 10 is a schematic structural diagram of yet another terminal device according to an embodiment of the present invention;
FIG. 11 is a schematic structural diagram of yet another terminal device according to an embodiment of the present invention;
FIG. 12 is a schematic structural diagram of yet another terminal device according to an embodiment of the present invention;
FIG. 13 is a schematic structural diagram of yet another terminal device according to an embodiment of the present invention;
FIG. 14 is a schematic structural diagram of yet another terminal device according to an embodiment of the present invention; and
FIG. 15 is a schematic structural diagram of yet another terminal device according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

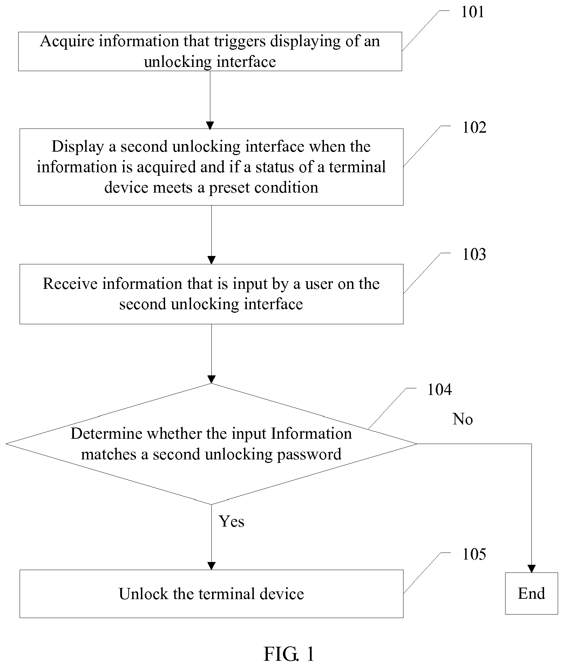

FIG. 1 is a schematic flowchart of a method for unlocking a terminal device according to an embodiment of the present invention, where a first unlocking password, a second unlocking password, a first unlocking interface, and a second unlocking interface are set on the terminal device. As shown in FIG. 1, the method includes:
101. Acquire information that triggers displaying of an unlocking interface.
102. Display the second unlocking interface when the information is acquired and if a status of the terminal device meets a preset condition.
103. Receive information that is input by a user on the second unlocking interface.
104. Determine whether the input information matches the second unlocking password, and if a result of the determining is yes, perform step 105.
105. Unlock the terminal device.

Complexity of the second unlocking password is lower than complexity of the first unlocking password.

In the foregoing technical solution, information that triggers displaying of an unlocking interface is acquired; when the information is acquired, if a status of a terminal device meets a preset condition, a second unlocking interface is displayed; information that is input by a user on the second unlocking interface is received; it is determined whether the input information matches a second unlocking password, and if a result of the determining is yes, the terminal device is unlocked; where complexity of the second unlocking password is lower than complexity of a first unlocking password. The complexity of the second unlocking password is lower than the complexity of the first unlocking password, and only when the information is acquired and if the status of the terminal device meets the preset condition, the second unlocking interface is displayed and the second unlocking password is used; in this way, user experience is enhanced when robustness of password protection is ensured.

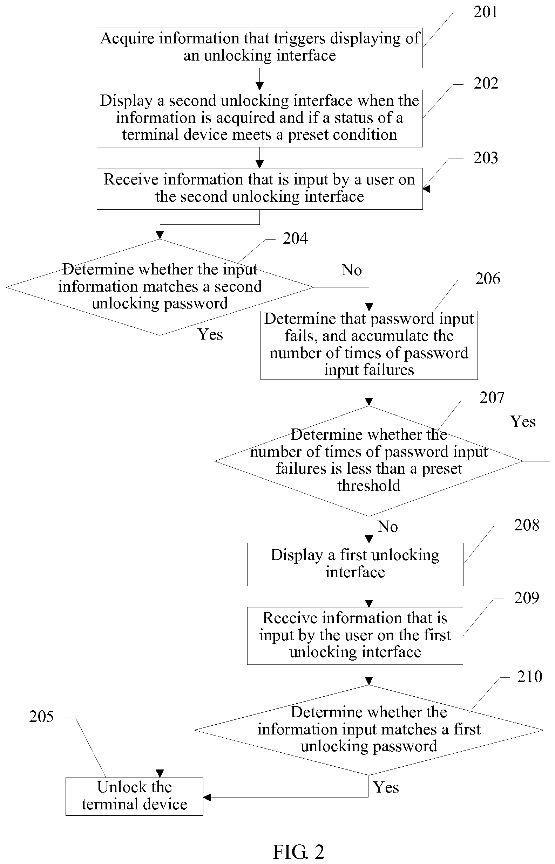

FIG. 2 is a schematic flowchart of another method for unlocking a terminal device according to an embodiment of the present invention, where a first unlocking password, a second unlocking password, a first unlocking interface, and a second unlocking interface are set on the terminal device. As shown in FIG. 2, the method includes:
201. Acquire information that triggers displaying of an unlocking interface.

Optionally, the foregoing step of acquiring information that triggers displaying of an unlocking interface may specifically include:
receiving information that is input by a user and instructs to trigger displaying of the unlocking interface, for example, a user presses a power button or an unlocking button;
   or
receiving information (for example, a short message) that is sent from a network side and triggers displaying of the unlocking interface;
   or
acquiring information (for example, a prompt message, such as an alarm clock) that is generated inside the terminal device and triggers displaying of the unlocking interface.

Certainly, in the present invention, the acquiring information that triggers displaying of an unlocking interface includes but is not limited to the foregoing listed implementation manners.

202. Display the second unlocking interface when the information is acquired and if a status of the terminal device meets a preset condition.

As an optional implementation manner, the foregoing preset condition may specifically include:
the number of times the second unlocking password has been used is less than a preset threshold.

In this implementation manner, the step 202 may specifically include:
displaying the second unlocking interface when the information is acquired and if the status of the terminal device meets the condition that the number of times the second unlocking password has been used is less than the preset threshold.

For example, the preset threshold is 3; when the information is acquired, the status of the terminal device meets the condition that the number of times the second unlocking password has been used is less than the preset threshold; that is, when the information is acquired, the number of times the second unlocking password has been used is less than 3.

Optionally, when the number of times the second unlocking password has been used reaches the preset threshold, the user may further reset a second unlocking password.

As an optional implementation manner, the foregoing preset condition may specifically include:
displaying of the unlocking interface is triggered within a preset period after a user terminates an operation on the terminal device.

In this implementation manner, the step 202 may specifically include:
displaying the second unlocking interface when the information is acquired and if the status of the terminal device meets the condition that the displaying of the unlocking interface is triggered within the preset period after the user terminates the operation on the terminal device.

Time when the information is acquired may be understood as the time when displaying of the unlocking interface is triggered. Certainly, the time when displaying of the unlocking interface is triggered may be slightly earlier than the time when the information is acquired, and the two may have a time difference. Because the time difference is relatively small, it may be ignored. In this specification, the time when displaying of the unlocking interface is triggered may be understood as the time when the information is acquired. That when the information is acquired, the status of the terminal device meets the condition that the displaying of the unlocking interface is triggered within the preset period after the user terminates the operation on the terminal device may specifically refer to that the time when the information is acquired falls within the preset period after the user terminates the operation on the terminal device. For example, the preset period is 30 minutes; then, when the time the information is acquired falls within 30 minutes after the user terminates the operation on the terminal device, the second unlocking interface is displayed. For example, the time when the user terminates the operation on the terminal device is exactly 8 o'clock; then, as long as the information that triggers displaying of the unlocking interface is acquired during 8 o'clock to half past 8 o'clock, the second unlocking interface is displayed.

As an optional implementation manner, the foregoing preset condition may specifically include:
the number of times the second unlocking password has been used is less than the preset threshold and the displaying of the unlocking interface is triggered within the preset period after the user terminates the operation on the terminal device; that is, the preset condition may specifically include: the number of times the second unlocking password has been used is less than the preset threshold; and the displaying of the unlocking interface is triggered within the preset period after the user terminates the operation on the terminal device.

In this implementation manner, the step 202 may specifically include:
displaying the second unlocking interface when the information is acquired and if the status of the terminal device meets the condition that the number of times the second unlocking password has been used is less than the preset threshold and that the displaying of the unlocking interface is triggered within the preset period after the user terminates the operation on the terminal device.

This implementation manner is a combination of the foregoing two implementation manners; that is, the second unlocking interface is displayed only if the foregoing two conditions are met. For example, the foregoing preset threshold is 3 and the foregoing preset period is 30 minutes; then, when the information that triggers displaying of the unlocking interface is acquired, only if the number of times the second unlocking password has been used is less than 3 and the time when the information that triggers displaying of the unlocking interface is acquired falls within 30 minutes after the user terminates the operation on the terminal device, the second unlocking interface is displayed.

203. Receive information that is input by a user on the second unlocking interface.

Optionally, the input information may be specifically information, such as a graph, or a character, or a digit. The input information may be understood as an input password, where a form of the password may be a graph, or a character, or a digit.

204. Determine whether the input information matches the second unlocking password, and if a result of the determining is yes, perform step 205.

205. Unlock the terminal device.

Complexity of the second unlocking password is lower than complexity of the first unlocking password.

Optionally, when the result of the determining in the step 204 is yes, it indicates that the password input by the user matches the second unlocking password, the terminal device is unlocked in the step 205, and the terminal device displays a main interface, an interface displayed when the user previously terminates an operation on the terminal device, or the like.

As an optional implementation manner, when the result of the determining in the step 204 is no, a step 206 may further be performed in the method.

206. Determine that password input fails, and accumulate the number of times of password input failures.

207. Determine whether the number of times of password input failures is less than a preset threshold, and if a result of the determining is yes, return to step 203.

In this way, when the number of times of password input failures is less than the preset threshold, it may be determined again whether the information input by the user matches the second unlocking password. That is, after a user fails to input the second unlocking password, the user may input the second unlocking password again.

As an optional implementation manner, when the result of the determining in the step 207 is no, a step 208 is performed.

Optionally, assuming that the foregoing preset threshold is 3, when the result of the determining in the step 207 is yes, which means that when the number of times the second unlocking password fails to be input is less than 3, the step 203 is performed; and when the result of the determining in the step 207 is no, which means that the number of times the second unlocking password fails to be input is not less than 3 (equal to or greater than 3), the step 208 may be performed.

Optionally, when the result of the determining in the step 207 is no, that is, the number of times the second unlocking password fails to be input is not less than the preset threshold; in this case, it indicates that a user fails to input the second unlocking password for multiple times; and then, the step 208 is performed to instruct the user to input the first unlocking password, so as to ensure security of a setting of the terminal device.

208. Display the first unlocking interface.

209. Receive information that is input by the user on the first unlocking interface.

210. Determine whether the input information matches the first unlocking password, and if a result of the determining is yes, perform step 205.

Optionally, when the result of the determining in the step 210 is no, or further, the number of times the user fails to input the first unlocking password reaches a preset threshold, the procedure ends.

Optionally, the first unlocking password is an unlocking password that is used when the first unlocking interface is displayed, which means that when the first unlocking interface is displayed, unlocking information input by the user, such as a graph or a character or a digit, needs to match the first unlocking password to enable unlocking.

Optionally, a condition for the terminal device to display the first unlocking interface may be specifically that the status of the terminal device does not meet the foregoing preset condition. For example, when the information that triggers displaying of the unlocking interface is acquired, if the number of times the second unlocking password of the terminal device has been used is greater than or equal to the foregoing preset threshold, the first unlocking interface is displayed; or when the time the information that triggers displaying of the unlocking interface is acquired falls out of the preset period after the user terminates the operation on the terminal device, the first unlocking interface is displayed; or when the information that triggers displaying of the unlocking interface is acquired, if the number of times the second unlocking password of the terminal device has been used is less than the foregoing preset threshold, but the time when the information that triggers displaying of the unlocking interface is acquired falls out of the preset period after the user terminates the operation on the terminal device, the first unlocking interface is displayed; or when the time the information that triggers displaying of the unlocking interface is acquired falls within the preset period after the user terminates the operation on the terminal device, and the information that triggers displaying of the unlocking interface is acquired, if the number of times the second unlocking password of the terminal device has been used is greater than or equal to the foregoing preset threshold, the first unlocking interface is displayed.

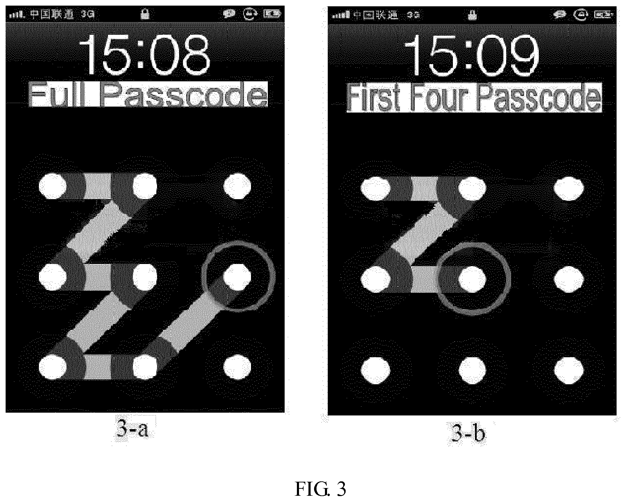

As an optional implementation manner, the complexity of the second unlocking password is lower than the complexity of the first unlocking password, where the complexity may specifically refer to the number of characters or complexity of a graph. It is assumed that the first unlocking password is a graph shown in FIG. 3-a and the second unlocking password may be shown in FIG. 3-b; in this way, when the information that triggers displaying of the unlocking interface is acquired, if the status of the terminal device meets the foregoing preset condition, a user may unlock the terminal device by inputting the second unlocking password shown in FIG. 3-b.

Optionally, the second unlocking password may be a part of the first unlocking password, where the first unlocking password is shown in FIG. 3-a, and the second unlocking password is shown in FIG. 3-b. The second unlocking password may be specifically set by the user.

Optionally, the second unlocking password and the first unlocking password may be specifically two independent passwords. For example, the first unlocking password is 7945123, and the second unlocking password may be 789; or the first unlocking password is a numeric password, and the second unlocking password is a graphical password; or the like. Specifically, the passwords may be preset by the user.

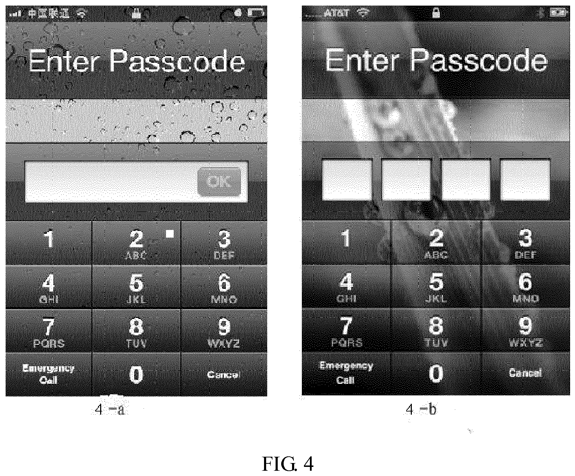

As an optional implementation manner, the first unlocking interface and the second unlocking interface may be two independent interfaces. It is assumed that the first unlocking interface is shown in FIG. 4-a and the second unlocking interface is shown in FIG. 4-b. Certainly, the first unlocking interface and the second unlocking interface may also be a same interface.

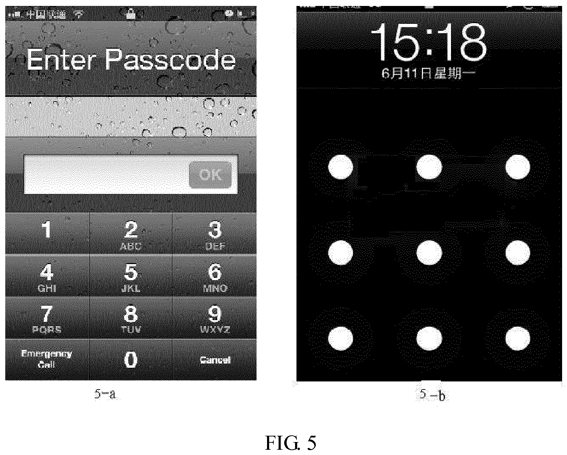

Optionally, the first unlocking password and the second unlocking password may further be two unlocking passwords with different attributes. For example, the first unlocking password is a numeric password, and the second unlocking password is a graphical password, where the first unlocking interface may be shown in FIG. 5-a and the second unlocking interface may be shown in FIG. 5-b. Therefore, a user can input a password in a more intuitive way.

As an optional implementation manner, the foregoing preset threshold may specifically include:
a preset threshold preset by a user; or
a preset threshold that is automatically set according to the complexity of the second unlocking password.

For example, the preset threshold may be set by a user, for example, the preset threshold is set to 3. Alternatively, the preset threshold may be automatically set according to the complexity of the second unlocking password. For example, if the number of digits of the second unlocking password is 2, the preset threshold may be automatically set to 1; or if the number of digits of the second unlocking password is 3, the preset threshold may be automatically set to 3.

As an optional implementation manner, the terminal device includes a terminal device that has an unlocking function, such as a mobile phone or a tablet computer.

In the foregoing technical solutions, the following content is added on the basis of the foregoing embodiment: when a password input by a user does not match a second unlocking password, it is determined whether the number of times of password input failures is less than a preset threshold; if a result of the determining is that the number of times of password input failures is less than the preset threshold, a step of determining whether information input by the user matches the second unlocking password is performed again; if a result of the determining is that the number of times of password input failures is not less than the preset threshold, a first unlocking interface is displayed, and it is determined whether the information input by the user matches a first unlocking password; and if a result of the determining is yes, a terminal device is unlocked. In this way, when the information input by the user does not match the second unlocking password, the user may input the first unlocking password to unlock the terminal.

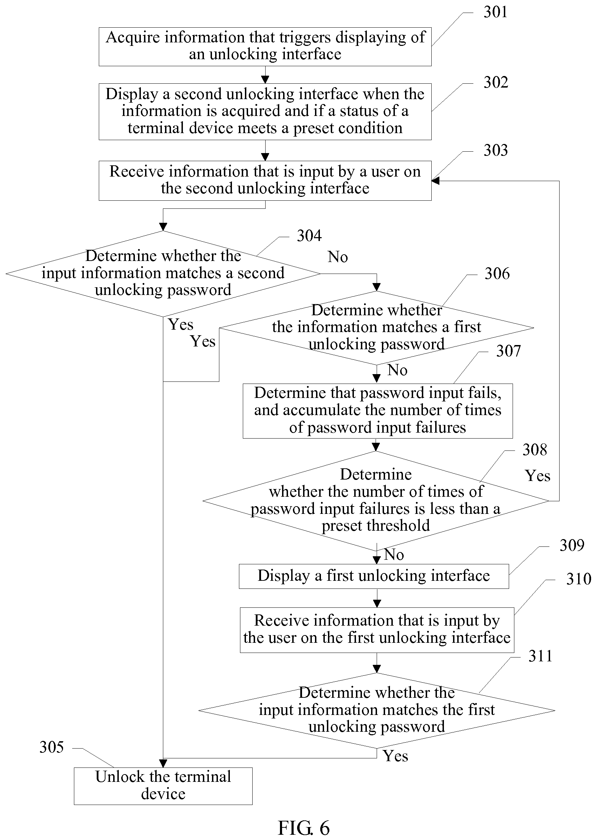

FIG. 6 is a schematic flowchart of still another method for unlocking a terminal device according to an embodiment of the present invention, where a first unlocking password, a second unlocking password, a first unlocking interface, and a second unlocking interface are set on the terminal device. As shown in FIG. 6, the method includes:
301. Acquire information that triggers displaying of an unlocking interface.
302. Display the second unlocking interface when the information is acquired and if a status of the terminal device meets a preset condition.
303. Receive information that is input by a user on the second unlocking interface.
304. Determine whether the input information matches the second unlocking password. If a result of the determining is yes, perform a step 305; and if a result of the determining is no, perform a step 306.
305. Unlock the terminal device.
306. Determine whether the information matches the first unlocking password. If a result of the determining is yes, perform the step 305; and if a result of the determining is no, perform a step 307.

In this way, when the second unlocking interface is displayed, the terminal device may still be unlocked when the information input by the user matches the first unlocking password.

307. Determine that password input fails, and accumulate the number of times of password input failures. In this case, the condition that the password input fails means that the information input by the user does not match either the first or the second unlocking password, and then, it is determined that the password input fails.

308. Determine whether the number of times of password input failures is less than a preset threshold, and if a result of the determining is yes, perform the step 303.

Complexity of the second unlocking password is lower than complexity of the first unlocking password.

As an optional implementation manner, when a result of the determining in the step 308 is no, a step 309 is performed.

309. Display the first unlocking interface.

310. Receive information that is input by the user on the first unlocking interface.

311. Determine whether the input information matches the first unlocking password, and if a result of the determining is yes, perform the step 305.

In the foregoing technical solutions, the following content is added on the basis of the foregoing embodiment: when information input by a user does not match a second unlocking password, it is determined whether the information input by the user matches a first unlocking password, and if yes, a terminal device is unlocked. In this way, when a second unlocking interface is displayed, the terminal device may also be unlocked when the information input by the user matches the first unlocking password. In addition, user experience is enhanced when robustness of password protection is ensured.

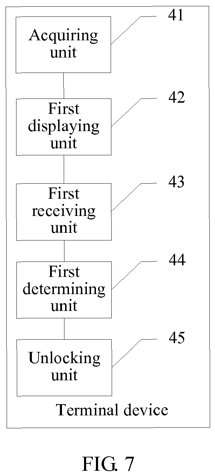

FIG. 7 is a schematic structural diagram of a terminal device according to an embodiment of the present invention, where a first unlocking password, a second unlocking password, a first unlocking interface, and a second unlocking interface are set on the terminal device. As shown in FIG. 7, the terminal device includes: an acquiring unit 41, a first displaying unit 42, a first receiving unit 43, a first determining unit 44, and an unlocking unit 45, where
the acquiring unit 41 is configured to acquire information that triggers displaying of an unlocking interface;
the first displaying unit 42 is configured to display the second unlocking interface when the acquiring unit 41 acquires the information and if a status of the terminal device meets a preset condition;
the first receiving unit 43 is configured to receive information that is input by a user on the second unlocking interface;
the first determining unit 44 is configured to determine whether the information received by the first receiving unit 43 matches the second unlocking password; and
the unlocking unit 45 is configured to unlock the terminal device when a result of the determining of the first determining unit 44 is yes.

In the foregoing technical solution, information that triggers displaying of an unlocking interface is acquired; when the information is acquired, if a status of a terminal device meets a preset condition, a second unlocking interface is displayed; information that is input by a user on the second unlocking interface is received; it is determined whether the input information matches a second unlocking password, and if a result of the determining is yes, the terminal device is unlocked; where complexity of the second unlocking password is lower than complexity of a first unlocking password. The complexity of the second unlocking password is lower than the complexity of the first unlocking password, and only when the information is acquired and if the status of the terminal device meets the preset condition, the second unlocking interface is displayed and the second unlocking password is used; in this way, user experience can be enhanced when robustness of password protection is ensured.

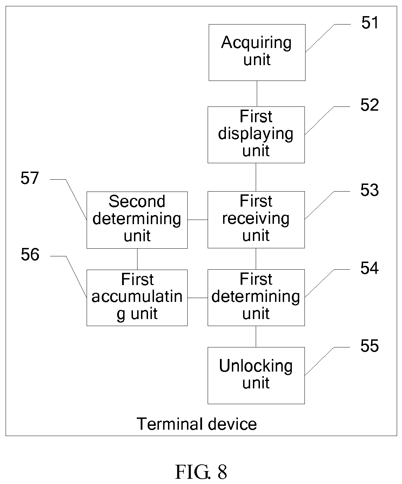

FIG. 8 is a schematic structural diagram of another terminal device according to an embodiment of the present invention, where a first unlocking password, a second unlocking password, a first unlocking interface, and a second unlocking interface are set on the terminal device. As shown in FIG. 8, the terminal device includes: an acquiring unit 51, a first displaying unit 52, a first receiving unit 53, a first determining unit 54, and an unlocking unit 55.

The acquiring unit 51 is configured to acquire information that triggers displaying of an unlocking interface.

As an optional implementation manner, the acquiring unit 51 may be further specifically configured to receive information that is input by a user and instructs to trigger displaying of the unlocking interface, for example, a user presses a power button or an unlocking button;
or
the acquiring unit 51 may be further specifically configured to receive information (for example, a short message) that is sent from a network side and triggers displaying of the unlocking interface;
or
the acquiring unit 51 may be further specifically configured to acquire information (for example, a prompt message, such as an alarm clock) that is generated inside the terminal device and triggers displaying of the unlocking interface.

Certainly, in the present invention, the acquiring information that triggers displaying of an unlocking interface includes but is not limited to the foregoing listed implementation manners.

The first displaying unit 52 is configured to display the second unlocking interface when the acquiring unit 51 acquires the information and if a status of the terminal device meets a preset condition.

As an optional implementation manner, the foregoing preset condition may specifically include:
the number of times the second unlocking password has been used is less than a preset threshold.

The first displaying unit 52 may be further specifically configured to display the second unlocking interface when the acquiring unit 51 acquires the information and if the status of the terminal device meets the condition that the number of times the second unlocking password has been used is less than the preset threshold.

For example, the preset threshold is 3; when the information is acquired, the status of the terminal device meets the condition that the number of times the second unlocking password has been used is less than the preset threshold; that is, when the information is acquired, the number of times the second unlocking password has been used is less than 3.

Optionally, when the number of times the second unlocking password has been used reaches the preset threshold, the user may further reset a second unlocking password.

As an optional implementation manner, the foregoing preset condition may specifically include:
displaying of the unlocking interface is triggered within a preset period after a user terminates an operation on the terminal device.

In this implementation manner, the first displaying 52 may be further specifically configured to display the second unlocking interface when the acquiring unit 51 acquires the information and if the status of the terminal device meets the condition that the displaying of the unlocking interface is triggered within the preset period after the user terminates the operation on the terminal device.

Time when the information is acquired may be understood as the time when displaying of the unlocking interface is triggered. Certainly, the time when displaying of the unlocking interface is triggered may be slightly earlier than the time when the information is acquired, and the two may have a time difference. Because the time difference is relatively small, it may be ignored. In this specification, the time when displaying of the unlocking interface is triggered may be understood as the time when the information is acquired. That when the information is acquired, the status of the terminal device meets the condition that the displaying of the unlocking interface is triggered within the preset period after the user terminates the operation on the terminal device may specifically refer to that the time when the information is acquired falls within the preset period after the user terminates the operation on the terminal device. For example, the preset period is 30 minutes; then, when the time the information is acquired falls within 30 minutes after the user terminates the operation on the terminal device, the second unlocking interface is displayed. For example, the time when the user terminates the operation on the terminal device is exactly 8 o'clock; then, as long as the information that triggers displaying of the unlocking interface is acquired during 8 o'clock to half past 8 o'clock, the second unlocking interface is displayed.

As an optional implementation manner, the foregoing preset condition may specifically include:
the number of times the second unlocking password has been used is less than the preset threshold and the displaying of the unlocking interface is triggered within the preset period after the user terminates the operation on the terminal device; that is, the preset condition may specifically include: the number of times the second unlocking password has been used is less than the preset threshold; and the displaying of the unlocking interface is triggered within the preset period after the user terminates the operation on the terminal device.

The first displaying 52 may be further specifically configured to display the second unlocking interface when the acquiring unit 51 acquires the information and if the status of the terminal device meets the condition that the number of times the second unlocking password has been used is less than the preset threshold and that the displaying of the unlocking interface is triggered within the preset period after the user terminates the operation on the terminal device.

This implementation manner is a combination of the foregoing two implementation manners; that is, the second unlocking interface is displayed only if the foregoing two conditions are met. For example, the foregoing preset threshold is 3 and the foregoing preset period is 30 minutes; then, when the information that triggers displaying of the unlocking interface is acquired, only if the number of times the second unlocking password has been used is less than 3 and the time when the information that triggers displaying of the unlocking interface is acquired falls within 30 minutes after the user terminates the operation on the terminal device, the second unlocking interface is displayed.

The first receiving unit 53 is configured to receive information that is input by a user on the second unlocking interface.

Optionally, the input information may be specifically information, such as a graph, or a character, or a digit. The input information may be understood as an input password, where a form of the password may be a graph, or a character, or a digit.

The first determining unit 54 is configured to determine whether the information received by the first receiving unit 53 matches the second unlocking password.

The unlocking unit 55 is configured to unlock the terminal device when a result of the determining of the first determining unit 54 is yes.

Complexity of the second unlocking password is lower than complexity of the first unlocking password.

As an optional implementation manner, the terminal device may further include:
a first accumulating unit 56, configured to determine, when a result of the determining of the first determining unit 54 is no, that password input fails, and accumulate the number of times of password input failures; and
a second determining unit 57, configured to determine whether the number of times of password input failures that is accumulated by the first accumulating unit 56 is less than a preset threshold; where
the first receiving unit 53 is further configured to, when a result of the determining of the second determining unit 57 is yes, receive information that is input by a user on the second unlocking interface.

In this way, when the number of times of password input failures is less than the preset threshold, it may be determined again whether the information input by the user matches the second unlocking password. That is, after a user fails to input the second unlocking password, the user may input the second unlocking password again.

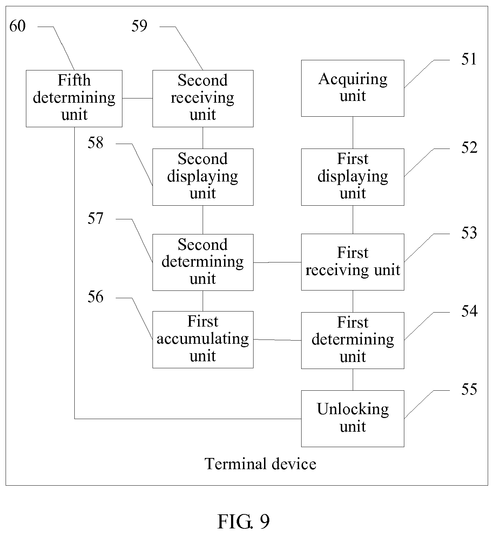

As an optional implementation manner, as shown in FIG. 9, the terminal device may further include:
a second displaying unit 58, configured to display the first unlocking interface when a result of the determining of the second determining unit 57 is no;
a second receiving unit 59, configured to receive information that is input by the user on the first unlocking interface; and
a fifth determining unit 60, configured to determine whether the information received by the second receiving unit 59 matches the first unlocking password; where
the unlocking unit 55 may further be configured to unlock the terminal device when a result of the determining of the fifth determining unit 60 is yes.

Optionally, the first unlocking password is an unlocking password that is used when the first unlocking interface is displayed, which means that when the first unlocking interface is displayed, unlocking information input by the user, such as a graph or a character or a digit, needs to match the first unlocking password to enable unlocking.

Optionally, a condition for the terminal device to display the first unlocking interface may be specifically that the status of the terminal device does not meet the foregoing preset condition. For example, when the information that triggers displaying of the unlocking interface is acquired, if the number of times the second unlocking password of the terminal device has been used is greater than or equal to the foregoing preset threshold, the first unlocking interface is displayed; or when the time the information that triggers displaying of the unlocking interface is acquired falls out of the preset period after the user terminates the operation on the terminal device, the first unlocking interface is displayed; or when the information that triggers displaying of the unlocking interface is acquired, if the number of times the second unlocking password of the terminal device has been used is less than the foregoing preset threshold, but the time when the information that triggers displaying of the unlocking interface is acquired falls out of the preset period after the user terminates the operation on the terminal device, the first unlocking interface is displayed; or when the time the information that triggers displaying of the unlocking interface is acquired falls within the preset period after the user terminates the operation on the terminal device, and the information that triggers displaying of the unlocking interface is acquired, if the number of times the second unlocking password of the terminal device has been used is greater than or equal to the foregoing preset threshold, the first unlocking interface is displayed.

As an optional implementation manner, the complexity of the second unlocking password is lower than the complexity of the first unlocking password, where the complexity may specifically refer to the number of characters or complexity of a graph. It is assumed that the first unlocking password is a graph shown in FIG. 3-a and the second unlocking password may be shown in FIG. 3-b; in this way, when the information that triggers displaying of the unlocking interface is acquired, if the status of the terminal device meets the foregoing preset condition, a user may unlock the terminal device by inputting the second unlocking password shown in FIG. 3-b.

Optionally, the second unlocking password may be a part of the first unlocking password, where the first unlocking password is shown in FIG. 3-a, and the second unlocking password is shown in FIG. 3-b. The second unlocking password may be specifically set by the user.

Optionally, the second unlocking password and the first unlocking password may be specifically two independent passwords. For example, the first unlocking password is 7945123, and the second unlocking password may be 789; or the first unlocking password is a numeric password, and the second unlocking password is a graphical password; or the like. Specifically, the passwords may be preset by the user.

As an optional implementation manner, the first unlocking interface and the second unlocking interface may be two independent interfaces. It is assumed that the first unlocking interface is shown in FIG. 4-a and the second unlocking interface is shown in FIG. 4-b. Certainly, the first unlocking interface and the second unlocking interface may also be a same interface.

Optionally, the first unlocking password and the second unlocking password may further be two unlocking passwords with different attributes. For example, the first unlocking password is a numeric password, and the second unlocking password is a graphical password, where the first unlocking interface may be shown in FIG. 5-a and the second unlocking interface may be shown in FIG. 5-b. Therefore, a user can input a password in a more intuitive way.

As an optional implementation manner, the foregoing preset threshold may specifically include:
a preset threshold preset by a user; or
a preset threshold that is automatically set according to the complexity of the second unlocking password.

For example, the preset threshold may be set by a user, for example, the preset threshold is set to 3. The preset threshold may further be automatically set according to the complexity of the second unlocking password. For example, if the number of digits of the second unlocking password is 2, the preset threshold may be automatically set to 1; or if the number of digits of the second unlocking password is 3, the preset threshold may be automatically set to 3.

As an optional implementation manner, the terminal device includes a terminal device that has an unlocking function, such as a mobile phone or a tablet computer.

In the foregoing technical solutions, the following content is added on the basis of the foregoing embodiment: when a password input by a user does not match a second unlocking password, it is determined whether the number of times of password input failures is less than a preset threshold; if a result of the determining is that the number of times of password input failures is less than the preset threshold, a step of determining whether information input by the user matches the second unlocking password is performed again; if a result of the determining is that the number of times of password input failures is not less than the preset threshold, a first unlocking interface is displayed, and it is determined whether the information input by the user matches a first unlocking password; and if a result of the determining is yes, a terminal device is unlocked. In this way, when the information input by the user does not match the second unlocking password, the user may input the first unlocking password to unlock the terminal.

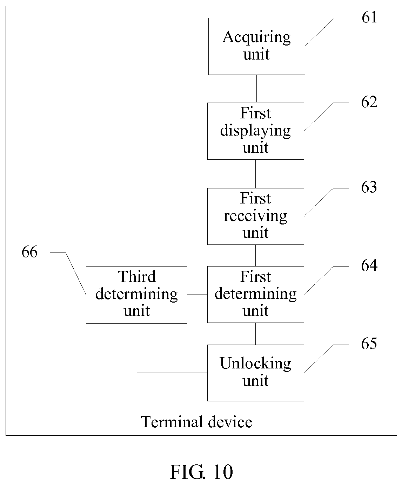

FIG. 10 is a schematic structural diagram of yet another terminal device according to an embodiment of the present invention, where a first unlocking password, a second unlocking password, a first unlocking interface, and a second unlocking interface are set on the terminal device. As shown in FIG. 10, the terminal device includes: an acquiring unit 61, a first displaying unit 62, a first receiving unit 63, a first determining unit 64, an unlocking unit 65, and a third determining unit 66, where
the acquiring unit 61 is configured to acquire information that triggers displaying of an unlocking interface;
the first displaying unit 62 is configured to display the second unlocking interface when the acquiring unit 61 acquires the information and if a status of the terminal device meets a preset condition;
the first receiving unit 63 is configured to receive information that is input by a user on the second unlocking interface;
the first determining unit 64 is configured to determine whether the information received by the first receiving unit 63 matches the second unlocking password;
the unlocking unit 65 is configured to unlock the terminal device when a result of the determining of the first determining unit 64 is yes; and
the third determining unit 66 is configured to, when a result of the determining of the first determining unit 64 is no, determine whether the information received by the first receiving unit matches the first unlocking password; where
the unlocking unit 65 is further configured to unlock the terminal device when a result of the determining of the third determining unit 66 is yes.

In this way, when the second unlocking interface is displayed, the terminal device may still be unlocked when the information input by the user matches the first unlocking password.

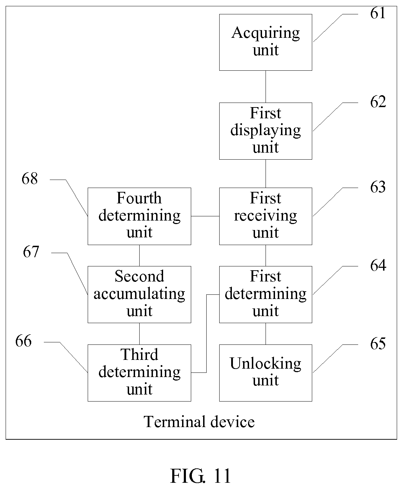

As an optional implementation manner, as shown in FIG. 11, the terminal device may further include:
a second accumulating unit 67, configured to determine, when both the result of the determining of the first determining unit 64 and the result of the determining of the third determining unit 66 are no, that password input fails, and accumulate the number of times of password input failures; in this case, the condition that the password input fails means that the information input by the user does not match either the first or the second unlocking password, and then, it is determined that the password input fails; and
a fourth determining unit 68, configured to determine whether the number of times of password input failures that is accumulated by the second accumulating unit 67 is less than a preset threshold; where
the first receiving unit 63 is further configured to, when a result of the determining of the fourth determining unit 68 is yes, receive information that is input by a user on the second unlocking interface.

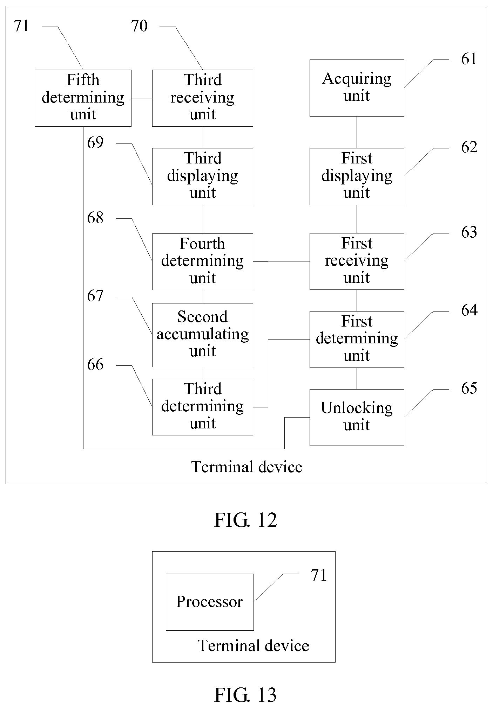

As an optional implementation manner, as shown in FIG. 12, the terminal device may further include:
a third displaying unit 69, configured to display the first unlocking interface when a result of the determining of the fourth determining unit 68 is no;
a third receiving unit 70, configured to receive information that is input by the user on the first unlocking interface; and
a fifth determining unit 71, configured to determine whether the information received by the third receiving unit 70 matches the first unlocking password; where
the unlocking unit 65 may further be configured to unlock the terminal device when a result of the determining of the fifth determining unit 71 is yes.

In the foregoing technical solutions, the following content is added on the basis of the foregoing embodiment: when information input by a user does not match a second unlocking password, it is determined whether the information input by the user matches a first unlocking password, and if yes, a terminal device is unlocked. In this way, when a second unlocking interface is displayed, the terminal device may also be unlocked when the information input by the user matches the first unlocking password. In addition, user experience is enhanced when robustness of password protection is ensured.

FIG. 13 is a schematic structural diagram of yet another terminal device according to an embodiment of the present invention, where a first unlocking password, a second unlocking password, a first unlocking interface, and a second unlocking interface are set on the terminal device. As shown in FIG. 13, the terminal device includes a processor 71, where
the processor 71 is configured to perform the following steps:
acquire information that triggers displaying of an unlocking interface;
display the second unlocking interface when the information is acquired and if a status of the terminal device meets a preset condition;
receive information that is input by a user on the second unlocking interface; and
determine whether the input information matches the second unlocking password, and if a result of the determining is yes, unlock the terminal device.

Complexity of the second unlocking password is lower than complexity of the first unlocking password.

In the foregoing technical solution, information that triggers displaying of an unlocking interface is acquired; when the information is acquired, if a status of a terminal device meets a preset condition, a second unlocking interface is displayed; information that is input by a user on the second unlocking interface is received; it is determined whether the input information matches a second unlocking password is determined, and if a result of the determining is yes, the terminal device is unlocked; where complexity of the second unlocking password is lower than complexity of a first unlocking password. The complexity of the second unlocking password is lower than the complexity of the first unlocking password, and only when the information is acquired and if the status of the terminal device meets the preset condition, the second unlocking interface is displayed and the second unlocking password is used; in this way, user experience is enhanced when robustness of password protection is ensured.

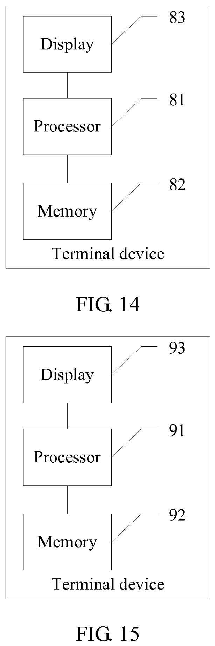

FIG. 14 is a schematic structural diagram of yet another terminal device according to an embodiment of the present invention, where a first unlocking password, a second unlocking password, a first unlocking interface, and a second unlocking interface are set on the terminal device. As shown in FIG. 14, the terminal device includes a processor 81, where
the processor 81 is configured to perform the following steps:
acquire information that triggers displaying of an unlocking interface;
display the second unlocking interface when the information is acquired and if a status of the terminal device meets a preset condition;
receive information that is input by a user on the second unlocking interface; and
determine whether the input information matches the second unlocking password, and if a result of the determining is yes, unlock the terminal device.

Complexity of the second unlocking password is lower than complexity of the first unlocking password.

Optionally, the step, which is performed by the processor 81, of acquiring information that triggers displaying of an unlocking interface may specifically include:
receiving information that is input by a user and instructs to trigger displaying of the unlocking interface, for example, a user presses a power button or an unlocking button;
   or
receiving information (for example, a short message) that is sent by a network side and triggers displaying of the unlocking interface;
   or
acquiring information (for example, a prompt message, such as an alarm clock) that is generated inside the terminal device and triggers displaying of the unlocking interface.

Certainly, in the present invention, the acquiring information that triggers displaying of an unlocking interface includes but is not limited to the foregoing listed implementation manners.

As an optional implementation manner, the foregoing preset condition may specifically include:
the number of times the second unlocking password has been used is less than a preset threshold.

In this implementation manner, the step, which is performed by the processor 81, of displaying the second unlocking interface when the information is acquired and if a status of the terminal device meets a preset condition may specifically include:
displaying the second unlocking interface when the information is acquired and if the status of the terminal device meets the condition that the number of times the second unlocking password has been used is less than the preset threshold.

For example, the preset threshold is 3; when the information is acquired, the status of the terminal device meets the condition that the number of times the second unlocking password has been used is less than the preset threshold; that is, when the information is acquired, the number of times the second unlocking password has been used is less than 3.

Optionally, when the number of times the second unlocking password has been used reaches the preset threshold, the user may further reset a second unlocking password.

As an optional implementation manner, the foregoing preset condition may specifically include:
displaying of the unlocking interface is triggered within a preset period after a user terminates an operation on the terminal device.

In this implementation manner, the step, which is performed by the processor 81, of displaying the second unlocking interface when the information is acquired and if a status of the terminal device meets a preset condition may specifically include:

When the information is acquired, if the status of the terminal device meets the condition that the displaying of the unlocking interface is triggered within the preset period after a user terminates an operation on the terminal device, the second unlocking interface is displayed.

Time when the information is acquired may be understood as the time when displaying of the unlocking interface is triggered. Certainly, the time when displaying of the unlocking interface is triggered may be slightly earlier than the time when the information is acquired, and the two may have a time difference. Because the time difference is relatively small, it may be ignored. In this specification, the time when displaying of the unlocking interface is triggered may be understood as the time when the information is acquired. That when the information is acquired, the status of the terminal device meets the condition that the displaying of the unlocking interface is triggered within the preset period after the user terminates the operation on the terminal device may specifically refer to that the time when the information is acquired falls within the preset period after the user terminates the operation on the terminal device. For example, the preset period is 30 minutes; then, when the time the information is acquired falls within 30 minutes after the user terminates the operation on the terminal device, the second unlocking interface is displayed. For example, the time when the user terminates the operation on the terminal device is exactly 8 o'clock; then, as long as the information that triggers displaying of the unlocking interface is acquired during 8 o'clock to half past 8 o'clock, the second unlocking interface is displayed.

As an optional implementation manner, the foregoing preset condition may specifically include:
the number of times the second unlocking password has been used is less than the preset threshold and the displaying of the unlocking interface is triggered within the preset period after the user terminates the operation on the terminal device; that is, the preset condition may specifically include: the number of times the second unlocking password has been used is less than the preset threshold; and the displaying of the unlocking interface is triggered within the preset period after the user terminates the operation on the terminal device.

In this implementation manner, the step, which is performed by the processor 81, of displaying the second unlocking interface when the information is acquired and if a status of the terminal device meets a preset condition may specifically include:
displaying the second unlocking interface when the information is acquired and if the status of the terminal device meets the condition that the number of times the second unlocking password has been used is less than the preset threshold and that the displaying of the unlocking interface is triggered within the preset period after the user terminates the operation on the terminal device.

This implementation manner is a combination of the foregoing two implementation manners; that is, the second unlocking interface is displayed only if the foregoing two conditions are met. For example, the foregoing preset threshold is 3 and the foregoing preset period is 30 minutes; then, when the information that triggers displaying of the unlocking interface is acquired, only if the number of times the second unlocking password has been used is less than 3 and the time when the information that triggers displaying of the unlocking interface is acquired falls within 30 minutes after the user terminates the operation on the terminal device, the second unlocking interface is displayed.

Optionally, the input information may be specifically information, such as a graph, or a character, or a digit. The input information may be understood as an input password, where a form of the password may be a graph, or a character, or a digit.

Optionally, when a result determined by the processor 81 is yes, it indicates that a password input by the user matches the second unlocking password, the terminal device is unlocked, and the terminal device displays a main interface, an interface displayed when the user previously terminates an operation on the terminal device, or the like.

As an optional implementation manner, when a result of the foregoing determining is no, the processor 81 may further be configured to perform the following steps:
determine that password input fails, and accumulate the number of times of password input failures; and
determine whether the number of times of password input failures is less than a preset threshold, and if a result of the determining is yes, return to the step of receiving information that is input by a user on the second unlocking interface.

In this way, when the number of times of password input failures is less than the preset threshold, it may be determined again whether the information input by the user matches the second unlocking password. That is, after a user fails to input the second unlocking password, the user may input the second unlocking password again.

As an optional implementation manner, when a result of the determining in the step, which is performed by the processor 81, of determining whether the number of times of password input failures is less than a preset threshold is no, the processor 81 may further be configured to perform the following steps:
display the first unlocking interface;
receive information that is input by the user on the first unlocking interface; and
determine whether the input information matches the first unlocking password, and if a result of the determining is yes, unlock the terminal device.

Optionally, the first unlocking password is an unlocking password that is used when the first unlocking interface is displayed, which means that when the first unlocking interface is displayed, unlocking information input by the user, such as a graph or a character or a digit, needs to match the first unlocking password to enable unlocking.

Optionally, a condition for the terminal device to display the first unlocking interface may be specifically that the status of the terminal device does not meet the foregoing preset condition. For example, when the information that triggers displaying of the unlocking interface is acquired, if the number of times the second unlocking password of the terminal device has been used is greater than or equal to the foregoing preset threshold, the first unlocking interface is displayed; or when the time the information that triggers displaying of the unlocking interface is acquired falls out of the preset period after the user terminates the operation on the terminal device, the first unlocking interface is displayed; or when the information that triggers displaying of the unlocking interface is acquired, if the number of times the second unlocking password of the terminal device has been used is less than the foregoing preset threshold, but the time when the information that triggers displaying of the unlocking interface is acquired falls out of the preset period after the user terminates the operation on the terminal device, the first unlocking interface is displayed; or when the time the information that triggers displaying of the unlocking interface is acquired falls within the preset period after the user terminates the operation on the terminal device, and the information that triggers displaying of the unlocking interface is acquired, if the number of times the second unlocking password of the terminal device has been used is greater than or equal to the foregoing preset threshold, the first unlocking interface is displayed.

As an optional implementation manner, the complexity of the second unlocking password is lower than the complexity of the first unlocking password, where the complexity may specifically refer to the number of characters or complexity of a graph. It is assumed that the first unlocking password is a graph shown in FIG. 3-a and the second unlocking password may be shown in FIG. 3-b; in this way, when the information that triggers displaying of the unlocking interface is acquired, if the status of the terminal device meets the foregoing preset condition, a user may unlock the terminal device by inputting the second unlocking password shown in FIG. 3-b.

Optionally, the second unlocking password may be a part of the first unlocking password, where the first unlocking password is shown in FIG. 3-a, and the second unlocking password is shown in FIG. 3-b. The second unlocking password may be specifically set by the user.

Optionally, the second unlocking password and the first unlocking password may be specifically two independent passwords. For example, the first unlocking password is 7945123, and the second unlocking password may be 789; or the first unlocking password is a numeric password, and the second unlocking password is a graphical password; or the like. Specifically, the passwords may be preset by the user.

As an optional implementation manner, the first unlocking interface and the second unlocking interface may be two independent interfaces. It is assumed that the first unlocking interface is shown in FIG. 4-a and the second unlocking interface is shown in FIG. 4-b. Certainly, the first unlocking interface and the second unlocking interface may also be a same interface.

Optionally, the first unlocking password and the second unlocking password may further be two unlocking passwords with different attributes. For example, the first unlocking password is a numeric password, and the second unlocking password is a graphical password, where the first unlocking interface may be shown in FIG. 5-a and the second unlocking interface may be shown in FIG. 5-b. Therefore, a user can input a password in a more intuitive way.

As an optional implementation manner, the foregoing preset threshold may specifically include:
a preset threshold preset by a user; or
a preset threshold that is automatically set according to the complexity of the second unlocking password.

For example, the preset threshold may be set by a user, for example, the preset threshold is set to 3. The preset threshold may further be automatically set according to the complexity of the second unlocking password. For example, if the number of digits of the second unlocking password is 2, the preset threshold may be automatically set to 1; or if the number of digits of the second unlocking password is 3, the preset threshold may be automatically set to 3.

As an optional implementation manner, the terminal device may further include:
a memory 82, configured to store a program that is executed by the processor.

As an optional implementation manner, the terminal device may further include:
a display 83, configured to display the foregoing first unlocking interface or the foregoing second unlocking interface. The display 83 may be a touchscreen display. In this way, the display 83 may further be configured to receive information input by a user and transmit the information input by the user to the processor 81 for processing.

As an optional implementation manner, the terminal device includes a terminal device that has an unlocking function, such as a mobile phone or a tablet computer.

In the foregoing technical solutions, the following content is added on the basis of the foregoing embodiment: when a password input by a user does not match a second unlocking password, it is determined whether the number of password input failures is less than a preset threshold; if a result of the determining is that the number of times of password input failures is less than the preset threshold, a step of determining whether information input by the user matches the second unlocking password is performed again; if a result of the determining is that the number of times of password input failures is not less than the preset threshold, a first unlocking interface is displayed, and it is determined whether the information input by the user matches a first unlocking password; and if a result of the determining is yes, a terminal device is unlocked. In this way, when the information input by the user does not match the second unlocking password, the user may input the first unlocking password to unlock the terminal.

FIG. 15 is a schematic structural diagram of yet another terminal device according to an embodiment of the present invention, where a first unlocking password, a second unlocking password, a first unlocking interface, and a second unlocking interface are set on the terminal device. As shown in FIG. 15, the terminal device includes a processor 91, where
the processor 91 is configured to perform the following steps:
acquire information that triggers displaying of an unlocking interface;
display the second unlocking interface when the information is acquired and if a status of the terminal device meets a preset condition;
receive information that is input by a user on the second unlocking interface;
determine whether the input information matches the second unlocking password, and if a result of the determining is yes, unlock the terminal device;
if a result of the determining is no, determine whether the information matches the first unlocking password; if a result of the determining is yes, unlock the terminal device; and if a result of the determining is no, determine that password input fails and accumulate the number of times of password input failures; in this case, the condition that the password input fails means that the information input by the user does not match either the first unlocking password or the second unlocking password, and then, it is determined that the password input fails; and
determine whether the number of times of password input failures is less than a preset threshold, and if a result of the determining is yes, return to the step of receiving information that is input by a user on the second unlocking interface.

Complexity of the second unlocking password is lower than complexity of the first unlocking password.

In this way, when the second unlocking interface is displayed, the terminal device may still be unlocked when the information input by the user matches the first unlocking password.

As an optional implementation manner, when a result of the determining in the step, which is performed by the processor 91, of determining whether the number of times of password input failures is less than a preset threshold is no, the processor 91 may further be configured to perform the following steps:
display the first unlocking interface;
receive information that is input by the user on the first unlocking interface; and
determine whether the input information matches the first unlocking password, and if a result of the determining is yes, unlock the terminal device.

As an optional implementation manner, the terminal device may further include:
a memory 92, configured to store a program that is executed by the processor.

As an optional implementation manner, the terminal device may further include:
a display 93, configured to display the foregoing first unlocking interface or the foregoing second unlocking interface. The display 93 may be a touchscreen display. In this way, the display 93 may further be configured to receive information input by a user and transmit the information input by the user to the processor 91 for processing.

As an optional implementation manner, the terminal device includes a terminal device that has an unlocking function, such as a mobile phone or a tablet computer.

In the foregoing technical solutions, the following content is added on the basis of the foregoing embodiment: when information input by a user does not match a second unlocking password, it is determined whether the information input by the user matches a first unlocking password, and if yes, a terminal device is unlocked. In this way, when a second unlocking interface is displayed, the terminal device is unlocked when the information input by the user matches the first unlocking password. In addition, user experience is enhanced when robustness of password protection is ensured.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

What is disclosed above is merely exemplary embodiments of the present invention. However, the protection scope of the present invention is not limited thereto. Therefore, equivalent variations made according to the claims of the present invention shall fall within the scope of the present invention.

## Claims

1. A method for unlocking a terminal device, wherein a first unlocking password, a second unlocking password and an unlocking interface are set on the terminal device, and the method comprises:
• acquiring information that triggers displaying of the unlocking interface (step 301);
• displaying the unlocking interface when the information is acquired and if a status of the terminal device meets a preset condition (step 302);
• receiving information that is input by a user on the unlocking interface (step 303); and
• determining whether the input information matches the second unlocking password (step 304),
∘ when a result of the determining is yes, unlocking the terminal device (step 305); and
∘ when the result of the determining is no, determining whether the input information matches the first unlocking password, and if a result of the determining is yes, unlocking the terminal device (step 306),
wherein a number of characters of the second unlocking password is less than a number of characters of the first unlocking password when the first and second unlocking passwords consist of characters,
or
the second unlocking password is part of a graph of the first unlocking password.

2. The method according to claim 1, wherein the preset condition comprises: the number of times the second unlocking password has been used is less than a preset threshold and/or displaying of the unlocking interface is triggered within a preset period after the user terminates an operation on the terminal device.

3. The method according to claim 1, wherein the method further comprises:
when it is determined that the information does not match either the first unlocking password or the second unlocking password, determining that password input fails, and accumulating the number of times of password input failures;
determining whether the number of times of password input failures is less than a preset threshold; and
if a result of the determining is that the number of times of password input failures is less than the preset threshold, performing the step of receiving information that is input by the user on the unlocking interface.

4. A terminal device configured to perform any of the methods according to claims 1-3.

5. A computer readable storage medium having a program recorded thereon, wherein the program makes a computer execute the method of any one of claims 1-3.

## Patentansprüche

1. Verfahren zum Entsperren einer Endgerätevorrichtung, wobei ein erstes Entsperrpasswort, ein zweites Entsperrpasswort und eine Entsperrschnittstelle an der Endgerätevorrichtung eingestellt sind und das Verfahren umfasst:
• Erfassung von Informationen, die die Anzeige der Entsperrschnittstelle auslösen (Schritt 301);
• Anzeige der Entsperrschnittstelle, wenn die Informationen erfasst werden und wenn ein Status der Endgerätevorrichtung eine voreingestellte Bedingung erfüllt (Schritt 302);
• Empfang von Informationen, die durch einen Benutzer an der Entsperrschnittstelle eingegeben werden (Schritt 303); und
• Feststellung, ob die eingegebenen Informationen zu einem zweiten Entsperrpasswort (Schritt 304) passen,
o wenn ein Ergebnis der Feststellung ja ist, Entsperren der Endgerätevorrichtung (Schritt 305); und
o wenn das Ergebnis der Feststellung nein ist, Feststellung, ob die eingegebenen Informationen zu einem ersten Entsperrpasswort passen, und wenn ein Ergebnis der Feststellung ja ist, Entsperren der Endgerätevorrichtung (Schritt 306),
wobei eine Anzahl von Zeichen des zweiten Entsperrpassworts geringer ist als eine Anzahl von Zeichen des ersten Entsperrpassworts, wenn die ersten und zweiten Entsperrpasswörter aus Zeichen bestehen,
oder
das zweite Entsperrpasswort Teil einer Kurve des ersten Entsperrpassworts ist.

2. Verfahren nach Anspruch 1, wobei der voreingestellte Zustand umfasst:
die Anzahl der Male, die das zweite Entsperrpasswort verwendet wurde, ist geringer als der voreingestellte Grenzwert und/oder die Anzeige der Entsperrschnittstelle wird innerhalb eines voreingestellten Zeitraums ausgelöst, nachdem der Benutzer eine Operation auf der Endgerätevorrichtung auslöst.

3. Verfahren nach Anspruch 1, wobei das Verfahren ferner umfasst:
wenn festgestellt wird, dass die Informationen nicht zu dem ersten Entsperrpasswort oder zu dem zweiten Entsperrpasswort passen, Feststellen, dass die Passworteingabe fehlschlägt, und erfassen der Anzahl von Malen, der Passworteingabefehlschläge;
Feststellen, ob die Anzahl Male, die die Passworteingabe fehlschlägt, unter einem vorgegebenen Grenzwert liegt; und
wenn ein Ergebnis der Feststellung ist, dass die Anzahl Male von Passworteingabefehlschlägen unter dem vorgegebenen Grenzwert liegt, Durchführung des Schritts des Empfangs von Informationen, die durch den Benutzer an der Entsperrschnittstelle eingegeben werden.

4. Endgerätevorrichtung, konfiguriert zum Durchführen eines der Verfahren nach Anspruch 1 bis 3.

5. Computerlesbares Speichermedium, auf dem ein Programm gespeichert ist, wobei das Programm einen Computer veranlasst, das Verfahren nach einem der Ansprüche 1 bis 3 auszuführen.

## Revendications

1. Procédé de déverrouillage d'un dispositif terminal, un premier mot de passe de déverrouillage, un second mot de passe de déverrouillage et une interface de déverrouillage étant définis sur le dispositif terminal, et le procédé consistant à :
acquérir une information qui déclenche l'affichage de l'interface de déverrouillage (étape 301) ;
afficher l'interface de déverrouillage quand l'information est acquise et si un statut du dispositif terminal satisfait à une condition prédéfinie (étape 302) ;
recevoir une information qui est entrée par un utilisateur sur l'interface de déverrouillage (étape 303) ; et
déterminer si l'information entrée concorde avec le second mot de passe de déverrouillage (étape 304),
quand un résultat de la détermination est oui, déverrouiller le dispositif terminal (étape 305) ; et
quand le résultat de la détermination est non, déterminer si l'information entrée concorde avec le premier mot de passe de déverrouillage, et si un résultat de la détermination est oui, déverrouiller le dispositif terminal (étape 306),
un nombre de caractères du second mot de passe de déverrouillage étant inférieur à un nombre de caractères du premier mot de passe de déverrouillage quand les premier et second mots de passe de déverrouillage sont constitués de caractères, ou
le second mot de passe de déverrouillage faisant partie d'un graphique du premier mot de passe de déverrouillage.

2. Procédé selon la revendication 1, dans lequel la condition prédéfinie comprend : le nombre de fois que le second mot de passe de déverrouillage a été utilisé est inférieur à un seuil prédéfini et/ou l'affichage de l'interface de déverrouillage est déclenché dans une période prédéfinie après que l'utilisateur a terminé une opération sur le dispositif terminal.

3. Procédé selon la revendication 1, le procédé consistant en outre à :
quand il est déterminé que l'information ne concorde ni avec le premier mot de passe de déverrouillage ni avec le second mot de passe de déverrouillage, déterminer que l'entrée du mot de passe échoue, et accumuler le nombre de fois que l'entrée du mot de passe a échoué ;
déterminer si le nombre de fois que l'entrée du mot de passe a échoué est inférieur à un seuil prédéfini ; et
si un résultat de la détermination est que le nombre de fois que l'entrée du mot de passe a échoué est inférieur au seuil prédéfini, réaliser l'étape consistant à recevoir une information qui est entrée par l'utilisateur sur l'interface de déverrouillage.

4. Dispositif terminal configuré pour réaliser l'un quelconque des procédés selon les revendications 1 à 3.

5. Support de stockage lisible par ordinateur sur lequel est enregistré un programme, le programme amenant un ordinateur à exécuter le procédé selon l'une quelconque des revendications 1 à 3.
